Europäisches Patentamt

European Patent Office

Office européen des brevets

(11) Numéro de publication: **0 098 201**
**A2**

(12) # DEMANDE DE BREVET EUROPEEN

(21) Numéro de dépôt: 83401261.9

(22) Date de dépôt: 17.06.83

(51) Int. Cl.³: **H 04 M 1/00**

(30) Priorité: 29.06.82 FR 8211393

(43) Date de publication de la demande:
11.01.84 Bulletin 84/2

(84) Etats contractants désignés:
DE GB IT SE

(71) Demandeur: THOMSON-CSF TELEPHONE
146, Boulevard de Valmy
F-92707 Colombes(FR)

(72) Inventeur: Gibaud, Michel
THOMSON-CSF SCPI 173, bld Haussmann
F-75379 Paris Cedex 08(FR)

(72) Inventeur: Lecomte, Daniel
THOMSON-CSF SCPI 173, bld Haussmann
F-75379 Paris Cedex 08(FR)

(74) Mandataire: Chaverneff, Vladimir et al,
THOMSON-CSF SCPI 173, Bld Haussmann
F-75379 Paris Cedex 08(FR)

(54) **Poste téléphonique universel avec touches de fonctions personnalisables.**

(57) Le poste de l'invention comporte une interface de ligne (4) reliée à un circuit BF (7), à un émetteur multifréquence (11) et à un UART (13). Un microprocesseur (15) associé à une mémoire vive non volatile (16) commande ces circuits ainsi qu'un afficheur (19) et un clavier d'introduction de données (20).
Application : téléphonie privée et téléphonie publique.

EP 0 098 201 A2

# POSTE TELEPHONIQUE UNIVERSEL AVEC
## TOUCHES DE FONCTIONS PERSONNALISABLES

La présente invention se rapporte à un poste téléphonique universel avec touches de fonctions personnalisables.

Les postes téléphoniques actuels, même ceux du genre "terminal télématique" n'offrent pas toutes les possibilités que l'on peut en attendre, ne sont pas facilement adaptables à tous les cas d'utilisation ni compatibles avec tous les réseaux existants.

La présente invention a pour objet un poste téléphonique offrant toutes les facilités d'un terminal télématique, qui soit universel et compatible avec la plupart des réseaux existants.

Le poste téléphonique conforme à l'invention comporte, relié à une paire de fils téléphoniques, un circuit d'interface de ligne avec son circuit d'alimentation en énergie, avantageusement par secteur électrique et à partir du courant de ligne, ce circuit d'interface étant relié à un circuit basse fréquence, à un émetteur de signaux multifréquence, et à un circuit de transmission et réception asynchrone (UART) associé à un détecteur-générateur de fréquence située hors de la bande téléphonique, le circuit d'interface ligne, le circuit basse fréquence, l'émetteur multifréquence, et l'UART étant d'autre part reliés à un bus de données qui est relié à un microprocesseur, à un afficheur, et à un clavier d'introduction de données, le microprocesseur étant relié à une mémoire vive non volatile.

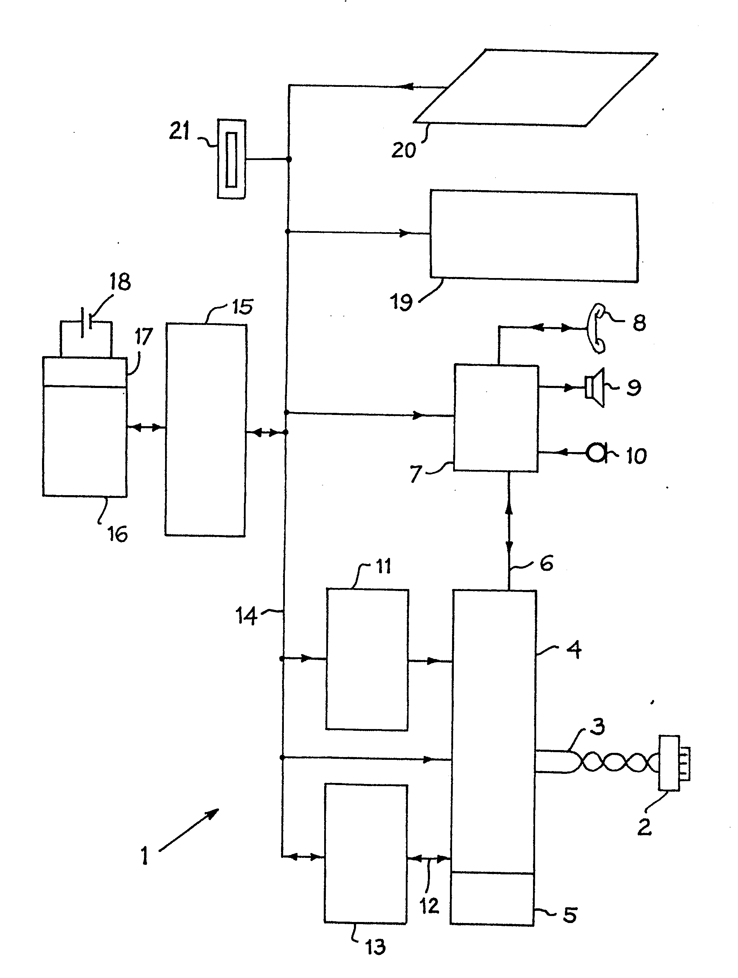

La présente invention sera mieux comprise à la lecture de la description détaillée d'un mode de réalisation pris comme exemple non limitatif et illustré par le dessin annexé dont la figure unique est un bloc-diagramme de ce mode de réalisation.

Le poste téléphonique universel 1 dont le schéma synoptique est représenté sur le dessin comporte une prise standard 2 de raccordement à un réseau téléphonique. Cette prise 2 est reliée par une paire de fils téléphoniques 3 à un circuit 4 d'interface de ligne classique. Le circuit 4 comporte une interface analogique-numérique (non représentée) et un circuit 5 d'alimentation en énergie de l'ensemble du poste téléphonique. De façon avantageuse, le circuit 5 permet l'alimentation en énergie du poste à partir d'un réseau de distribution électrique et à partir du courant de ligne.

Le circuit d'interface 4 est relié par une liaison analogique basse fréquence 6 à un circuit basse fréquence classique 7 relié à un combiné téléphonique 8, à un haut-parleur 9 et à un microphone 10. Ce circuit 7 comporte notamment un amplificateur à gain réglable pour utilisation en "mains libres" incluant des moyens anti-effet Larsen, un circuit synthétiseur de parole, un circuit de reconnaissance de la parole, une interface numérique-analogique (non représentés), et une sonnerie électronique.

Le circuit 4 est relié d'autre part à la sortie d'un émetteur de signaux de numérotation multifréquence et décimaux 11, et par une liaison bidirectionnelle basse fréquence 12 à un circuit 13 de transmission et réception asynchrone (UART) comportant un détecteur-générateur de fréquence fonctionnant à une fréquence située hors de la bande de fréquences téléphoniques, par exemple 12 kHz.

Les entrées et/ou sorties numériques des interfaces analogique-numérique des circuits 4, 7, 11 et 13 sont reliées à un bus de données 14 lui-même relié à un calculateur numérique 15 constituant l'organe central et "intelligent" du poste 1. Le calculateur 15 est par exemple un microprocesseur 8 bits ayant une mémoire morte de programme comportant un programme de gestion de poste téléphonique approprié. Le calculateur 15 est en outre relié à une mémoire vive 16 dont au moins une partie 17 est du type non volatile, par exemple en technologie C-MOS alimentée par une batterie 18. Selon une variante, la mémoire 16 peut être entièrement non volatile du type EAROM.

Le bus 14 est en outre relié à un afficheur alphanumérique 19, à un clavier d'introduction de données 20 à touches toutes programmables, et à une embase de connecteur 21 permettant de relier des périphériques extérieurs au poste 1, par exemple une imprimante ou un écran de visualisation. L'afficheur 19, le clavier 20, et les éventuels périphériques extérieurs sont gérés par le calculateur 15.

La numérotation, décimale ou multifréquence, est composée par l'utilisateur sur le clavier 20 et émise, sous contrôle du calculateur 15 par l'émetteur 11 via l'interface 4.

Le calculateur 15 permet la programmation de n'importe quelle touche du clavier 20 en une fonction spécifique compréhensible par le central téléphonique auquel est raccordé le poste 1. A cet effet, le calculateur 15 possède un programme de gestion des touches de fonctions du clavier 20, chaque fonction ainsi programmée étant mise en mémoire dans la partie non volatile de la mémoire 17. Cette programmation est facilitée grâce à l'affichage de messages sur l'afficheur 19, ces messages étant dans ce cas les valeurs des contenus des pas du programme de chaque fonction à réaliser.

On peut ainsi programmer, de façon connue en soi, par exemple les fonctions suivantes : numéro abrégé, rappel automatique sur faisceau occupé (la programmation se fait en fonction de l'autocommutateur auquel est relié le poste téléphonique), prise d'un réseau ou d'un faisceau extérieur, fonction offre, appel d'un groupe particulier, recomposition du dernier numéro composé, mise en absence momentanée, recherche des personnes, et toute autre fonction compréhensible par le central téléphonique auquel est relié le poste.

En outre, le poste téléphonique de l'invention permet la programmation de fonctions particulières. Lorsque ce poste est relié à un autocommutateur possédant une interface de ligne spécialisée, il permet d'établir un dialogue plus évolué, dans les deux sens de communication entre ce poste et l'autocommutateur. Ceci est possible grâce au circuit UART référencé 13. La signalisation est transmise sur une fréquence hors de la bande de fréquences téléphoniques, c'est-à-dire une fréquence supérieure à 4 kHz, afin de ne pas être entendue par l'opérateur et ne pas le gêner. Bien entendu, le circuit de ligne d'abonné correspondant du central téléphonique doit comporter le même circuit UART, supervisé par l'unité de commande de ce central. Cette possibilité de communication bidirectionnelle confère au poste de l'invention une grande souplesse d'emploi. L'autocommutateur de rattachement peut par exemple signaler au poste que le correspondant demandé est occupé et lui envoyer un message en clair qui est affiché par l'afficheur 19.

De plus, on peut, à partir de l'autocommutateur ou à partir d'un poste de commande relié à cet autocommutateur, télécharger des données

4

ou un programme d'exploitation d'une partie ou de la totalité des touches de fonction du clavier 20, ou bien modifier des fonctions ou un type d'affichage (par exemple pour un changement de langue). Les données ainsi téléchargées sont stockées dans la mémoire non volatile 17. Le poste de l'invention peut être commandé et téléchargé par un autocommutateur privé spécifique, puis utilisé sur un autre autocommutateur privé ou public standard. Ainsi, le poste téléphonique de l'invention est universel, tout en ayant des caractéristiques propres à chaque installation, donc à chaque client ou à chaque pays, ce qui permet de réduire son coût de fabrication car il ne faut fabriquer et stocker qu'un seul type de poste.

Bien entendu, si l'autocommutateur auquel est relié le poste téléphonique de l'invention ne comporte pas d'UART, il ne pourra pas lui envoyer d'informations, mais il pourra recevoir des informations en provenance du poste.

Les informations que peut afficher l'afficheur 19 sont très diverses, et ce d'autant plus qu'elles peuvent être modifiées par téléchargement. On peut par exemple, à titre non limitatif, afficher la date, l'heure, le prix d'une communication, ou les informations suivantes : TRANSFERT, RAPPEL, PARKING, ABSENT, INTERNE, RESEAU, ERREUR, OCCUPE, LIBRE, OFFRE, GARDE, ALARME, CONFERENCE, POSTE, FILTRE, RENVOI, TRAFIC, CONTROLE, ETC . . .

5

## REVENDICATIONS

1. Poste téléphonique universel avec touches de fonctions personnalisables, caractérisé par le fait qu'il comporte, relié à une paire de fils téléphoniques (3), un circuit d'interface de ligne (4) avec son circuit d'alimentation en énergie (5), ce circuit d'interface étant relié à un circuit basse fréquence (7), à un émetteur de signaux multifréquence (11), et à un circuit de transmission et réception asynchrone (UART) (13) associé à un détecteur-générateur de fréquence située hors de la bande téléphonique, le circuit basse fréquence, le circuit d'interface ligne, l'émetteur multifréquence, et l'UART étant d'autre part reliés à un bus de données (14) qui est relié à un microprocesseur (15), à un afficheur (19), et à un clavier d'introduction de données (20).

2. Poste téléphonique selon la revendication 1, caractérisé par le fait que le circuit d'alimentation en énergie du circuit d'interface de ligne est alimenté par le secteur électrique et par le courant de ligne.

3. Poste téléphonique selon l'une des revendications 1 ou 2, caractérisé par le fait que le microprocesseur est relié à une mémoire vive non volatile (16 à 18).

4. Poste téléphonique selon l'une quelconque des revendications précédentes, caractérisé par le fait que ledit bus de données est relié à une embase de connecteur (21) permettant de relier des périphériques extérieurs au poste téléphonique.

5. Poste téléphonique selon l'une quelconque des revendications précédentes, caractérisé par le fait que l'on télécharge dans la mémoire vive du microprocesseur des données ou un programme d'exploitation d'une partie ou de la totalité des touches de fonction du clavier.

6. Poste téléphonique selon l'une quelconque des revendications précédentes, caractérisé par le fait qu'il peut être connecté sur tout type de réseau de manière universelle.

7. Poste téléphonique selon l'une quelconque des revendications précédentes, caractérisé par le fait qu'il peut être commandé ét téléchargé sur un autocommutateur privé spécifique puis utilisé sur un autre autocommutateur privé ou public standard.